# EUROPÄISCHE PATENTSCHRIFT

(11) **EP 3 115 521 B1**
(45) Veröffentlichungstag und Bekanntmachung des Hinweises auf die Patenterteilung: **07.03.2018**
(21) Anmeldenummer: 16001504.6
(22) Anmeldetag: 06.07.2016
(51) Int. Cl.: E04B 1/61, E04B 2/74, F16B 5/00, F16B 12/22, E04H 1/12

(54) **BESCHLAG UND BESCHLAGSYSTEM ZUM REVERSIBLEN VERBINDEN VON FLÄCHIGEN ELEMENTEN SOWIE MODULARES STELLWANDSYSTEM**
FITTING AND FITTING SYSTEM FOR REVERSIBLY CONNECTING FLAT ELEMENTS AND MODULAR POSITIONING WALL SYSTEM
ARMATURE ET SYSTEME D'ARMATURE DESTINE A LA LIAISON REVERSIBLE D'ELEMENTS PLATS ET SYSTEME DE PAROI VERTICALE MODULAIRE

(30) Priorität: 06.07.2015 DE 102015008521
(43) Veröffentlichungstag der Anmeldung: 11.01.2017
(73) Patentinhaber: Hartman, Jan, 04229 Leipzig (DE); Neubert, Andreas, 04177 Leipzig (DE)
(72) Erfinder: Hartman, Jan, 04229 Leipzig (DE); Neubert, Andreas, 04177 Leipzig (DE)
(74) Vertreter: Nourney, David

(56) Entgegenhaltungen:
- DE-A1- 3 330 221
- US-A1- 2014 255 093

## Beschreibung

Die vorliegende Erfindung bezieht sich auf einen Beschlag und ein Beschlagsystem zum reversiblen Verbinden von flächigen Elementen sowie ein modulares Stellwandsystem, die unter anderem im Messebau Anwendung finden.

Beschläge und Beschlagsysteme sowie Stellwandsysteme sind aus dem Stand der Technik an sich bekannt. Beispielsweise beschreibt DE 299 19 265 U1 eine Stellwandanordnung, die so aufgebaut ist, dass ein Beschlagteil dem einen Stellwandelement zugeordnet wird, während ein anderes Beschlagteil dem anderen Stellwandelement zugeordnet wird. Ein Verbindungsbolzen dient dazu, die beiden Beschlagteile und damit die beiden Stellwandelemente miteinander zu verbinden. Der Bolzen wird mit seinem Kopf in den Schlitz in dem Beschlagteil eingeführt. Durch Verdrehen des Beschlagteils wird wegen der zunehmenden Wandstärke des Beschlagteils ein Zug auf den Kopf und damit auf den Bolzen ausgeübt, was zur Festlegung der beiden Stellwandelemente aneinander führt. Weiterhin beschreibt DE 33 30 221 A1 ein Verbindungselement zum lösbaren Verbinden zweier Bauteile, insbesondere von Platten mit ihren Stirnseiten. Das Verbindungselement besteht aus zwei Bauelementen, welche jeweils um 180° verdreht angeordnet sind. Jedes Bauelement weist einen hakenförmigen Ansatz oder einen Bolzen auf, der jeweils in Ausnehmungen des zweiten Bauelementes eingeschoben wird.

Diese sowie auch andere bekannte Systeme weisen den Nachteil auf, dass zum Verbinden von Stellwandelementen mehrteilige und teilweise komplexe Beschläge eingesetzt werden müssen, die in der Handhabung bedienungsintensiv sind und spezielle Werkzeuge benötigen. Für viele Systeme sind zudem Rahmenkonstruktionen erforderlich, was nicht nur die Optik beeinträchtigt, sondern auch die Kosten für das einzelne Stellwandelement erhöht.

Der vorliegenden Erfindung liegt daher die Aufgabe zugrunde, einen Beschlag und ein Beschlagsystem bereitzustellen, welche die Nachteile des Standes der Technik überwinden und eine einfache und robuste Möglichkeit bieten, flächige Elemente reversibel zu verbinden. Gleichzeitig soll ein einfaches und kostengünstiges modulares Stellwandsystem zur Verfügung gestellt werden, das einerseits leicht aber stabil ist und andererseits schnell auf- und abgebaut werden kann.

Diese Aufgabe wird in einem ersten Aspekt der vorliegenden Erfindung durch einen Beschlag (1) zum reversiblen Verbinden von flächigen Elementen (7) gelöst, umfassend
- einen Grundkörper (101), der eine langlochförmige Vertiefung (101l), zumindest ein erstes Innengewinde (101a) und zumindest eine erste Verbindungsaufnahme (101e) aufweist,
- ein Schließblech (103), das ein Langloch (103l) mit einer mittig angeordneten kreisförmigen Öffnung (103c) und zumindest eine erste Verbindungsdurchführung (103e) aufweist,
   wobei der Grundkörper (101) und das Schließblech (103) durch zumindest ein Verbindungsmittel (109) lösbar miteinander verbunden sind, und
- einen Schraubbolzen (105), der an seinem ersten Ende ein zu dem ersten Innengewinde (101a) des Grundkörpers (101) passendes Außengewinde (105a) und an seinem zweiten Ende einen Kopf (105c) aufweist, dessen Durchmesser kleiner als der Durchmesser der kreisförmigen Öffnung (103c) des Schließblechs (103) und größer als die Breite des Langlochs (103l) in dem Schließblech (103) ist,.
In einem zweiten Aspekt der vorliegenden Erfindung wird die Aufgabe durch ein Beschlagsystem (100) zum reversiblen Verbinden von flächigen Elementen (7) gelöst, umfassend
- zumindest zwei erfindungsgemäße Beschläge (1) zum reversiblen Verbinden von flächigen Elementen (7), umfassend
   - einen Grundkörper (101), der eine langlochförmige Vertiefung (101l), zumindest ein erstes Innengewinde (101a) und zumindest eine erste Verbindungsaufnahme (101e) aufweist,
   - ein Schließblech (103), das ein Langloch (1031) mit einer mittig angeordneten kreisförmigen Öffnung (103c) und zumindest eine erste Verbindungsdurchführung (103e) aufweist,
      wobei der Grundkörper (101) und das Schließblech (103) durch zumindest ein Verbindungsmittel (109) lösbar miteinander verbunden sind, und
- zumindest einen Schraubbolzen (105), der an seinem ersten Ende ein zu dem ersten Innengewinde (101a) des Grundkörpers (101) passendes Außengewinde (105a) und an seinem zweiten Ende einen Kopf (105c) aufweist, dessen Durchmesser kleiner als der Durchmesser der kreisförmigen Öffnung (103c) des Schließblechs (103) und größer als die Breite des Langlochs (1031) in dem Schließblech (103) ist,
wobei der Schraubbolzen (105) in einen der zumindest zwei Beschläge (1) eingeschraubt ist.

Die Aufgabe wird ferner in einem dritten Aspekt der vorliegenden Erfindung durch ein modulares Stellwandsystem (300) gelöst, umfassend
- zumindest zwei flächige Elemente (7) und
- zumindest zwei erfindungsgemäße Beschlagsysteme (100),
wobei die zumindest zwei flächigen Elemente (7) zumindest in ihren zueinander gewandten Seitenflächen (701) jeweils Aussparungen (703) zur Aufnahme der Beschlagsysteme (100) aufweisen, wobei in jede Aussparung (703) ein Beschlag (1) eines Beschlagsystems (100) eingebracht ist, so dass die zumindest zwei flächigen Elemente (7) mittels der zumindest zwei Beschlagsysteme (100) untereinander reversibel verbindbar sind.

Im Folgenden wird die Erfindung im Detail beschrieben. Vorteile und Ausführungsformen, die in Bezug auf einen der drei vorstehend genannten Aspekte beschrieben werden, gelten für die beiden anderen vorstehend genannten Aspekte entsprechend.

Der erste Aspekt der vorliegenden Erfindung bezieht sich auf einen Beschlag (1) zum reversiblen Verbinden von flächigen Elementen (7). Der Beschlag (1) umfasst einen Grundkörper (101), der eine langlochförmige Vertiefung (101l), zumindest ein erstes Innengewinde (101a) und zumindest eine erste Verbindungsaufnahme (101e) aufweist. Der Beschlag (1) umfasst ferner ein Schließblech (103), das ein Langloch (103l) mit einer mittig angeordneten kreisförmigen Öffnung (103c) und zumindest eine erste Verbindungsdurchführung (103e) aufweist. Dabei sind der Grundkörper (101) und das Schließblech (103) durch zumindest ein Verbindungsmittel (109) lösbar miteinander verbunden. Ferner umfasst der erfindungsgemäße Beschlag (1) einen Schraubbolzen (105), der an seinem ersten Ende ein zu dem ersten Innengewinde (101a) des Grundkörpers (101) passendes Außengewinde (105a) und an seinem zweiten Ende einen Kopf (105c) aufweist, dessen Durchmesser kleiner als der Durchmesser der kreisförmigen Öffnung (103c) des Schließblechs (103) und größer als die Breite des Langlochs (1031) in dem Schließblech (103) ist.

Der Grundkörper (101) ist bevorzugt länglich ausgebildet und weist vorzugsweise neben dem ersten Innengewinde (101a) ein zweites Innengewinde (101b) auf. Die Innengewinde (101a, 101b) sind vorzugsweise M8-Gewinde. Der Grundkörper (101) ist insbesondere über die Mitte seiner Längsachse und über die Mitte seiner Querachse jeweils spiegelsymmetrisch ausgebildet. Ferner weist der Grundkörper (101) neben der ersten Verbindungsaufnahme (101e) vorzugsweise eine weitere zweite Verbindungsaufnahme (101f) auf. Die erste und zweite Verbindungsaufnahme (101e, 101f) sind in Längsrichtung außen neben dem ersten Innengewinde (101a) und dem zweiten Innengewinde (101b) angeordnet. Die langlochförmige Vertiefung (101l) ist breiter als das Langloch (1031) des Schließblechs (103) und breiter als der Kopf (105c) eines Schraubbolzens (105).

Das Schließblech (103) ist bevorzugt ebenfalls länglich ausgebildet und ist insbesondere über die Mitte seiner Längsachse und über die Mitte seiner Querachse jeweils spiegelsymmetrisch ausgebildet. Es hat vorzugsweise die gleiche Breite wie der Grundkörper (101), jedoch eine größere Länge als der Grundkörper (101). Das Langloch (1031) ist in dem Schließblech (103) in Längsrichtung angeordnet. Mittig in dem Langloch (1031) ist eine kreisförmige Öffnung (103c) vorgesehen, deren Durchmesser größer ist als die Breite des Langlochs (103l). Der Durchmesser der kreisförmigen Öffnung (103c) entspricht der Breite der langlochförmigen Vertiefung (101l). Das Schließblech (103) weist ferner zumindest eine erste Verbindungsdurchführung (103e), und bevorzugt eine zweite Verbindungsdurchführung (103f), auf. Vorzugsweise sind in Längsrichtung im Bereich der Enden, die über den Grundkörper (101) hinausstehen, zwei Verbindungslöcher (103g, 103h) vorgesehen.

Um den Grundkörper (101) und das Schließblech (103) miteinander zu verbinden, werden diese so aufeinander gelegt, dass das Langloch (103l) an einem Ende zumindest das erste Innengewinde (101a) und vorzugsweise an seinem anderen Ende das zweite Innengewinde (101b) freilässt. Zudem fluchten das Langloch (1031) und die langlochförmige Vertiefung (101l) miteinander. Ferner werden zumindest die erste Verbindungsaufnahme (101e) des Grundkörpers (101) und die erste Verbindungsdurchführung (103e) des Schließblechs (103) zur Deckung gebracht - vorzugsweise auch die zweite Verbindungsaufnahme (101e) und die zweite Verbindungsdurchführung (103e). Durch das Verbindungsmittel (109), bevorzugt zwei, werden der Grundkörper (101) und das Schließblech (103) miteinander verbunden. In einer konkreten Ausführungsform der Erfindung ist das Verbindungsmittel (109) eine Gewindeschraube, insbesondere mit M4-Gewinde, die durch die erste Verbindungsdurchführung (103e) in die als Innengewinde, insbesondere als M4-Gewinde, ausgestaltete erste Verbindungsaufnahme (101e) geschraubt wird. Gleiches gilt für das Durchführen eines Verbindungsmittels (109) durch die zweite Verbindungsdurchführung (103e) und das Einschrauben in die zweite Verbindungsaufnahme (101e).

Der Grundkörper (101) und das Schließblech (103) bilden im Bereich von langlochförmiger Vertiefung (101l) und Langloch (103l) einen Hinterschnitt, in den der Kopf (105c) eines Schraubbolzens (105), der nachstehend noch beschrieben wird, eingreifen kann.

Der Beschlag (1) ist dazu ausgelegt, in eine entsprechend vorbereitete Aussparung (701a) des flächigen Elements (7) eingebracht zu werden, so dass dieser grundsätzlich in Bezug auf die Vorderseite bzw. Rückseite des flächigen Elements (7) verdeckt ist. Zum Befestigen des Beschlags (1) an dem flächigen Element (7) sind die vorstehend erwähnten Verbindungslöcher (103g, 103h) vorgesehen, durch welche Befestigungsmittel, beispielsweise Schrauben, geführt und in dem flächigen Element (7) befestigt, beispielsweise verschraubt, werden können.

Bevorzugte Maße des Beschlags (1) und seiner Einzelteile werden in den Figuren als bevorzugte Ausführungsformen definiert, ohne die Erfindung jedoch auf diese Maße einzuschränken.

Der erfindungsgemäße Beschlag (1) ist in vorteilhafter Weise einfach und damit kostengünstig aufgebaut und lässt sich in großer Stückzahl günstig produzieren. Anders als im Stand der Technik sind durch den erfindungsgemäßen Beschlag (1) keine zueinander komplementären Beschlagteile, d.h. Positiv- und Negativteile, erforderlich. Er ist ferner sehr einfach an einem flächigen Element (7) zu befestigen. Nach dem Befestigen stehen keine Teile über die Ränder des flächigen Elements (7) hinaus, so dass die Verletzungsgefahr für Personen deutlich verringert wird. Zudem ist der Beschlag (1) auch als Verbindungsbeschlag im Rahmenbau einsetzbar, wo wieder lösbare Verbindungen benötigt werden.

Der Beschlag (1) umfasst ferner einen Schraubbolzen (105), der an seinem ersten Ende ein zu dem ersten Innengewinde (101a) des Grundkörpers (101) passendes Außengewinde (105a), insbesondere ein M8-Gewinde, und an seinem zweiten Ende einen Kopf (105c) aufweist, dessen Durchmesser kleiner als der Durchmesser der kreisförmigen Öffnung (103c) des Schließblechs (103) und größer als die Breite des Langlochs (103l) in dem Schließblech (103) ist.

Das Außengewinde (105a) ist in einer Ausführungsform über den größten Teil der Länge des Schraubbolzens (105) ausgebildet. So ist es möglich, durch gezieltes Ein- und Ausdrehen des Schraubbolzens (105) abweichende Materialdicken, beispielsweise durch Verschleiß, oder materialbedingtes Schwundverhalten auszugleichen. Ferner weist der Schraubbolzen (105) zwischen dem Kopf (105c) und dem Außengewinde (105a) einen glatten Bereich (1051) auf, der das Gleiten des Schraubbolzens (105) in dem Langloch (103l) des Schließblechs (103) erleichtert.

Andererseits kann das Außengewinde (105a) nicht über die gesamte Länge des Schraubbolzens (105) ausgebildet sein und insbesondere am Übergang vom Außengewinde (105a) zum glatten Bereich (1051) einen Anschlag aufweisen, der ein weiteres Eindrehen in das erste Innengewinde (101a) des Grundkörpers (101) verhindert.

Der Kopf (105c) kann eine Werkzeugaufnahme (105w) aufweisen, beispielsweise einen Schlitz, einen Kreuzschlitz, einen Innensechskant (sog. "Inbus"), einen Außensechskant, ein Schrauben-Mitnahmeprofil in Vielrundform (sog. "Torx") oder dergleichen.

Durch das Einschrauben des Schraubbolzens (105) in einen Beschlag (1) wird eine einfache und robuste Möglichkeit geschaffen, diesen Beschlag (1) mit einem weiteren Beschlag (1) ohne eingeschraubten Schraubbolzen (105) zu verbinden.

Dabei wird der Kopf (105c) des Schraubbolzens (105), der in den einen Beschlag (1) eingeschraubt ist, in die kreisförmige Öffnung (103c) des Schließblechs (103) des anderen Beschlags eingeführt und beide Beschläge (1) in Längsrichtung gegeneinander verschoben, so dass der Schraubbolzen (105) in einen Teil des Langlochs (1031) gleitet und an dessen Ende anschlägt. Durch den gegenüber der Breite des Langlochs (1031) größeren Durchmesser des Kopfs (105c) werden beide Beschläge (1) aneinander gehalten.

Auf diese Weise kann das nachstehend noch im Detail beschriebene Beschlagsystem (100) erhalten werden.

Es ist in einer Weiterbildung der Erfindung bevorzugt, wenn das Schließblech (103) des Beschlags (1) zu der kreisförmigen Öffnung (103c) hin einen verjüngten Bereich (103j) aufweist. Das bedeutet, dass die Dicke des Schließblechs (103) in Längsrichtung in dem verjüngten Bereich (103j) an der kreisförmigen Öffnung (103c) geringer ist als an den Enden, wobei die Dicke kontinuierlich zunimmt, bzw. abnimmt. Die Verringerung der Dicke des Schließblechs (103) in dem verjüngten Bereich (103j) beträgt 20 % bis 50 %, bevorzugt 30 % bis 35 %. Der verjüngte Bereich (103j) ist nur auf der dem Grundkörper (101) zugewandten Seite des Schließblechs (103) vorhanden. Zudem kann der Grundkörper (101) komplementär zu dem verjüngten Bereich (103j) einen ausgebauchten Bereich (101j) aufweisen.

Durch diese Weiterbildung ist es möglich, beim Verbinden eines Beschlags (1) mit eingeschraubtem Schraubbolzen (105) und eines Beschlags (1) ohne eingeschraubten Schraubbolzen (105) zunächst das Einführen des Kopfs (105c) des Schraubbolzens (105) in die kreisförmige Öffnung (103c) des Schließblechs (103) zu erleichtern und dann beim Einschieben des Schraubbolzens (105) in das Langloch (103l) des Schließblechs (103) beide Beschläge fest aneinander zu ziehen.

Es ist ferner bevorzugt, wenn in einer anderen Weiterbildung zwischen dem Grundkörper (101) und dem Schließblech (103) zumindest ein elastisches Element (107) angeordnet ist. Dabei ist das elastische Element (107) insbesondere im Bereich der ersten Verbindungsaufnahme (101e) des Grundkörpers (101) und der ersten Verbindungsdurchführung (103e) des Schließblechs (103) vorgesehen - insbesondere auch im Bereich zweite Verbindungsaufnahme (101f) / zweite Verbindungsdurchführung (103f). In einer konkreten Ausführungsform ist das elastische Element (107) ein Gummiring.

Abhängig von der Dicke des elastischen Elements (107) ergibt sich bei dem vorstehend beschriebenen Aneinanderziehen zweier Beschläge (1) ein elastisch bedingtes Spiel von 0,5 mm bis 2,0 mm, welches das feste Aneinanderziehen weiter unterstützt.

In dem zweiten Aspekt betrifft die vorliegende Erfindung ein Beschlagsystem (100) zum reversiblen Verbinden von flächigen Elementen (7). Das Beschlagsystem (100) umfasst zumindest zwei erfindungsgemäße Beschläge (1), wie sie vorstehend beschrieben wurden, und zumindest einen Schraubbolzen (105).

Wie vorstehend schon ausgeführt, weist der Schraubbolzen (105) an seinem ersten Ende ein zu dem ersten Innengewinde (101a) des Grundkörpers (101) passendes Außengewinde (105a) und an seinem zweiten Ende einen Kopf (105c) auf, dessen Durchmesser kleiner als der Durchmesser der kreisförmigen Öffnung (103c) des Schließblechs (103) und größer als die Breite des Langlochs (103l) in dem Schließblech (103) ist.

Für das Beschlagsystem (100) ist der Schraubbolzen (105) in einen der zumindest zwei Beschläge (1) eingeschraubt.

Es wurde vorstehend schon ausgeführt, dass beim Verbinden von zwei erfindungsgemäßen Beschlägen (1) der Kopf (105c) des Schraubbolzens (105), der in den einen Beschlag (1) eingeschraubt ist, in die kreisförmige Öffnung (103c) des Schließblechs (103) des anderen Beschlags (1) ohne eingeschraubten Schraubbolzen (105) eingeführt wird und dann beide Beschläge (1) in Längsrichtung gegeneinander verschoben werden. Folglich gleitet der Schraubbolzen (105) in einen Teil des Langlochs (1031) und schlägt an dessen Ende an, wodurch die endgültige Verbindungsposition der beiden Beschläge (1) erreicht wird. Durch den gegenüber der Breite des Langlochs (1031) größeren Durchmesser des Kopfs (105c) werden beide Beschläge (1) aneinander gehalten.

Es ergibt sich der Vorteil, dass das Beschlagsystem (100) eine einfache und robuste Möglichkeit darstellt, zwei erfindungsgemäße Beschläge (1) miteinander zu verbinden und damit auch zwei Elemente, in denen die erfindungsgemäßen Beschläge (1) aufgenommen sind, reversibel, d.h. wieder lösbar, zu verbinden. Aus Gründen der Stabilität werden zum Verbinden von zwei Elementen vorzugsweise zwei erfindungsgemäße Beschlagsysteme (100), d.h. vier erfindungsgemäße Beschläge (1) mit zwei Schraubbolzen (105) eingesetzt.

Ein weiterer Vorteil des Beschlagsystems (100) ist, dass nur eine Art von Beschlag (1) vorgesehen ist und nicht wie im Stand der Technik mindestens zwei sich ergänzende Beschläge. Lediglich durch Einschrauben des Schraubbolzens (105) wird einer der Beschläge (1) zur Positiv- (oder Negativ-) Form. Die Anzahl der herzustellenden und einzusetzenden Teile verringert sich daher deutlich, was die Kosten senkt. Gleichzeitig wird die Variabilität des Beschlagsystems (100) gegenüber dem Stand der Technik erhöht.

Die durch das erfindungsgemäße Beschlagsystem (100) zu verbindenden Elemente sind vielfältig und schließen insbesondere flächige Elemente (7) wie Stellwände und dergleichen ein. Es können aber mit dem erfindungsgemäßen Beschlagsystem (100) auch Elemente im Rahmenbau, ggf. mit Stoff bespannt, Bodenplatten, Deckenplatten, Akustikpaneele oder feste Wände für Notunterkünfte (mit Dämmeigenschaften) reversibel miteinander verbunden werden.

In einer vorteilhaften Ausführungsform umfasst das Beschlagsystem (100) ferner zumindest einen Hilfsbolzen (3), der dazu ausgelegt ist, in ein Hilfssackloch (705b) einer Hilfsaussparung (705) aufgenommen zu werden, wobei der Durchmesser des Hilfsbolzens (3) dem Durchmesser des Hilfssacklochs (705b) entspricht.

Das Vorsehen des Hilfsbolzens (3) dient in vorteilhafter Weise dazu, beim Verbinden von größeren Elementen, d.h. Elementen mit längeren Kanten, mittels des erfindungsgemäßen Beschlagsystems (100) das bündige Ausrichten, das Führen und das Justieren dieser größeren Elemente zu erleichtern, ohne andererseits ein weiteres. Beschlagsystem (100) vorsehen zu müssen. Es wird eine einfache, aber wirkungsvolle Führung geschaffen, die das Verbinden der erfindungsgemäßen Beschläge (1) erleichtert. In Verbindung mit dem dritten Aspekt sowie in den Ausführungsbeispielen wird hierauf noch im Detail eingegangen.

In einer Weiterbildung des erfindungsgemäßen Beschlagsystems (100) umfasst dieses ferner zumindest ein winkliges Verbindungselement (5). Das winklige Verbindungselement (5) ist zweischenklig oder dreischenklig oder vierschenklig ausgestaltet. In jedem Schenkel (5a, 5b, 5c, 5d) des winkligen Verbindungselements (5) ist zumindest eine Aussparung (501) vorgesehen, deren Durchmesser größer als der Durchmesser des Schraubbolzens (105) und kleiner als der Kopf (105c) des Schraubbolzens (105) ist.

Die winkligen Verbindungselemente (5) dienen dazu, zwei oder drei oder vier mit dem erfindungsgemäßen Beschlagsystem (100) versehene Elemente miteinander in festgelegten oder variablen Winkeln zueinander zu verbinden, d.h. über deren Befestigung an einer oberen und/oder unteren Schmalkante dieser Elemente.

Die zumindest eine Aussparung (501) ist von der Mitte des jeweiligen Schenkels (5a, 5b, 5c, 5d) her zum Rand hin offen. Das winklige Verbindungselement (5) kann somit auf einen erfindungsgemäßen Beschlag (1) mit eingeschraubtem Schraubbolzen (105) von der Seite des Beschlags (1) aufgeschoben werden.

Es ist bevorzugt, wenn zwei Aussparungen (501) in jedem Schenkel (5a, 5b, 5c, 5d) vorgesehen sind, die einen Mittenabstand aufweisen, welcher dem Mittenabstand von erstem Innengewinde (101a) und zweitem Innengewinde (101b) des Grundkörpers (101) entspricht. Für diesen Fall können beispielsweise zwei Schraubbolzen (105) in einen Beschlag (1) eingeschraubt werden, was die Stabilität der Verbindung erhöht. Alternativ können andere Befestigungsmittel wie Gewinde mit Überwurfmutter verwendet werden.

Vorzugsweise sind die Aussparungen (501) in zwei benachbarten Schenkeln (5a, 5b, 5c, 5d) zu entgegengesetzten Seiten hin geöffnet. Auf diese Weise kann ein winkliges Verbindungselement (5) problemlos an zunächst provisorisch aufgestellte Elemente, welche mit dem erfindungsgemäßen Beschlagsystem (100) versehen sind, angebracht werden, indem es über seine Mitte gedreht und damit auf die Schraubbolzen (105) oder alternative Befestigungsmittel aufgeschoben wird. Hierzu hat es sich ferner als vorteilhaft herausgestellt, wenn die Aussparungen (501) in den Schenkeln (5a, 5b, 5c, 5d) nicht rechtwinklig zur Außenkante der Schenkel (5a, 5b, 5c, 5d) ausgerichtet sind, sondern auf einer gedachten Kreisbahn der Drehung liegen, um das Aufschieben zu erleichtern.

Ein winkliges Verbindungselement (5) mit zwei Schenkeln (5a, 5b) kann einen Winkel zwischen 5° und 180° aufspannen, wobei sich feste Winkel von 45° oder 60° oder 90° oder 135° als praktisch sinnvoll herausgestellt haben.

Ein winkliges Verbindungselement (5) mit drei Schenkeln (5a, 5b, 5c) kann zwischen zwei seiner Schenkel (5a, 5b, 5c) jeweils einen Winkel zwischen 5° und 180° aufspannen wobei die Summe der Winkel 360° ergeben muss. Praktisch sinnvolle Ausgestaltungen weisen Winkel von 180°/90°/90° und 120°/120°/120° auf.

Ein winkliges Verbindungselement (5) mit vier Schenkeln (5a, 5b, 5c, 5d) kann zwischen zwei seiner Schenkel (5a, 5b, 5c) jeweils einen Winkel zwischen 5° und 175° aufspannen, wobei die Summe der Winkel 360° ergeben muss. Eine praktisch sinnvolle Ausgestaltung weist Winkel von 90°/90°/90°/90° auf.

Eine spezielle Ausgestaltung des winkligen Verbindungselements (5) betrifft eine variable Einteilung des Winkels, bzw. der Winkel. In dieser Ausgestaltung sind die zwei oder drei oder vier Schenkel (5a, 5b, 5c, 5d) verstellbar miteinander verbunden, so dass abhängig von den Erfordernissen nahezu beliebige Winkel eingestellt werden können. Beispielsweise können zwei Schenkel (5a, 5b) mit einer lösbaren Gewindeschraube verbunden sein, die zum Einstellen eines bestimmten Winkels festgezogen werden kann.

Der dritte Aspekt der vorliegenden Erfindung betrifft ein modulares Stellwandsystem (300), das zumindest zwei flächige Elemente (7) und zumindest zwei erfindungsgemäße Beschlagsysteme (100), wie sie vorstehend beschrieben wurden, umfasst. Die zumindest zwei flächigen Elemente (7) weisen zumindest in ihren zueinander gewandten Seitenflächen (701) jeweils Aussparungen (703) zur Aufnahme der Beschlagsysteme (100) auf, wobei in jede Aussparung (703) ein Beschlag (1) eines Beschlagsystems (100) eingebracht ist, so dass die zumindest zwei flächigen Elemente (7) mittels der zumindest zwei Beschlagsysteme (100) untereinander reversibel verbindbar sind.

Das modulare Stellwandsystem (300) gemäß der vorliegenden Erfindung stellt ein einfaches und damit kostengünstiges sowie sehr flexibles System dar, mit dem in Abhängigkeit von den Erfordernissen schnell und reversibel Stellwände, beispielsweise für Messen und Ausstellungen, aufgebaut werden können. Der Montageaufwand und der Umfang der benötigten Einzelteile und Elemente sowie Werkzeuge ist gegenüber herkömmlichen Systemen deutlich reduziert und verringert so die logistischen Anforderungen beim Aufbau.

Neben einem Einsatz für Messen und Ausstellungen, bei denen leichtere Ausführungen des modularen Stellwandsystems (300) verwendet werden können, stellt beispielsweise die Unterteilung von Notunterkünften mit einer stabileren Version des modularen Stellwandsystems (300), vorzugsweise mit Schall- und oder Wärmedämm-Eigenschaften, ein weiteres Anwendungsgebiet dar. Zudem kann das modulare Stellwandsystems (300) für den Ladenbau, sog. "Shop-in-Shop"-Anordnungen, den Innenausbau oder die variable Gliederung in Großraumbüros eingesetzt werden.

Unter "flächigen Elementen" werden Elemente verstanden, deren zweidimensionale Ausdehnung mindestens eine Größenordnung der Maßeinheit über deren Dicke liegt. Erfindungsgemäß sind flächige Elemente (7) vor allem Wandelemente, konkret Stellwandelemente, die temporär aufgebaut werden.

Die erfindungsgemäßen flächigen Elemente (7) weisen einen innenliegenden Rahmen (707) auf, der vorzugsweise aus eingeleimtem Vollholz besteht, dessen Ecken auf Gehrung gesägt und entsprechend gefügt sind. Für den innenliegenden Rahmen (707) können aber abhängig vom Einsatzzweck andere Materialien Anwendung finden, beispielsweise Kunststoffprofile oder Metallprofile. Hier sind beispielsweise Aluminiumprofile mit Kederschiene zum Arretieren von Stoffbespannungen ein Einsatzgebiet. Ferner können Metallprofile, bspw. Aluminiumprofile, direkt mit zumindest einem Langloch (103l) mit einer mittig angeordneten kreisförmigen Öffnung (103c) versehen werden.

Die erfindungsgemäßen flächigen Elemente (7) weisen den Vorteil auf, dass sie leicht, dünn und schnell auf- und abbaubar sind und weniger Stauraum bzw. Lagerfläche benötigen, wenn sie nicht gebraucht werden.

Auf den innenliegenden Rahmen (707) wird beidseitig eine Deckschicht aufgebracht, die ebenfalls abhängig vom Einsatzzweck aus unterschiedlichen Materialien bestehen kann. Erfindungsgemäß bevorzugt sind hochdichte Faserplatten (HDF) oder mitteldichte Faserplatten (MDF) mit farbigem Dekor oder naturfarben (überstreichbar). Ferner sind Hochdrucklaminate (HPL "High Pressure Laminate") oder Akustikpaneele, ggf. mit Mikroperforierung, als Deckschicht einsetzbar.

Der Raum zwischen den Deckschichten kann je nach Einsatzzweck mit unterschiedlichen Materialien gefüllt sein. Erfindungsgemäß bevorzugt für die Anwendung im Messebau ist eine Füllig aus einem Hanf/Kenaf-Laminat in Wellenform (erhältlich von der Firma Lisocore). Ferner können Wabenstrukturen aus Pappe oder Kunststoff, insbesondere schwer entflammbare, Schaumstoffe aus Polystyrol oder Polyurethan oder Fasermaterialien wie Steinwolle oder Glaswolle verwendet werden.

Die Seitenflächen (701) der flächigen Elemente (7), d.h. die Außenseiten des innenliegenden Rahmens (709), sind mit Aussparungen (703) zur Aufnahme der Beschlagsysteme (100) versehen. Im Fall des erfindungsgemäßen konkreten Ausführungsbeispiels sind Langlöcher (703l) und Sacklöcher (703b) eingebracht, welche den Außenabmessungen der erfindungsgemäßen Beschläge (1) entsprechen. Konkret wird für jeden Beschlag (1) ein tieferes Sackloch (703b) vorgesehen, welches den Grundkörper (101) des Beschlags (1) aufnehmen kann, während für die Aufnahme des Schließblechs (103) ein weniger tiefes Langloch (703l) vorgesehen wird. Darüber hinaus können Bohrungen oder Körnungen auf der Höhe des ersten Verbindungslochs (103g) und/oder des zweiten Verbindungslochs (103h) im Schließblech (103) vorgesehen werden, um das Verschrauben bzw. Verbinden des Beschlags (1) mit dem flächigen Element (7) zu erleichtern.

In einer Weiterbildung des modularen Stellwandsystems (300) sind die flächigen Elemente (7) rechteckig ausgebildet. Eine spezielle Ausführungsform sind quadratische flächige Elemente (7). Erfindungsgemäß hauptsächlich vorgesehene flächige Elemente (7) sind Rechtecke, die zwei kürzere Seitenflächen (701k) und zwei längere Seitenflächen (701l) aufweisen.

In ihren kürzeren Seitenflächen (701k) weisen die flächigen Elemente (7) jeweils zwei Aussparungen (703) zur Aufnahme der Beschlagsysteme (100) auf. Die Aussparungen (703) haben einen festgelegten Abstand (A) von der Ecke des flächigen Elements (7).

In ihren längeren Seitenflächen (701l) weisen die flächigen Elemente (7) ebenfalls jeweils zwei Aussparungen (703) zur Aufnahme der Beschlagsysteme (100) auf, die ebenfalls einen festgelegten Abstand (A) von der Ecke des flächigen Elements (7) haben.

Zudem weisen die flächigen Elemente (7) zumindest in ihren längeren Seitenflächen (701l) mittig jeweils eine Hilfsaussparung (705) zur Aufnahme des Hilfsbolzens (3) auf. Im Fall des erfindungsgemäßen konkreten Ausführungsbeispiels sind hierfür Hilfslanglöcher (705l) und Hilfssacklöcher (705b) vorgesehen. In das Hilfssackloch (705b) eines flächigen Elements (7) wird ein Hilfsbolzen (3) eingesetzt, der zum bündigen Ausrichten und zum Führen zunächst in dem Hilfslangloch (705l) eines anderen flächigen Elements (7) gleitet, bevor er zum Justieren in dessen Hilfssackloch (705b) aufgenommen wird.

Zum Aufbau des modularen Stellwandsystems (300) werden zunächst die flächigen Elemente (7) mit bereits eingebrachten Beschlägen (1) in der späteren Reihenfolge bereitgestellt. In die beiden in einer Seitenfläche (701) vorhandenen Beschläge (1) eines ersten flächigen Elements (7) wird nun jeweils ein Schraubbolzen (105) in ein Innengewinde (101a, 101b) eingeschraubt, konkret jeweils in das obere Innengewinde (101a). In ein zweites flächiges Element (7), das an das erste flächige Element (7) angesetzt werden soll, werden keine Schraubbolzen (105) eingeschraubt. Alternativ können die Schraubbolzen (105) nicht in das erste flächige Element (7), sondern in das zweite flächige Element (7) eingeschraubt werden, dann konkret jeweils in das untere Innengewinde (10 1b).

Zum Verbinden werden nun die Köpfe (105c) der Schraubbolzen (105) in die gegenüberliegenden kreisförmigen Öffnungen (103c) des Schließblechs (103) eingeführt und dann das zweite flächige Element (7) in Längsrichtung so gegen das erste flächige Element (7) verschoben, in einer konkreten Ausführungsform von oben nach unten, dass die beiden Schraubbolzen (105) in den Langlöchern (103l) bis zum Anschlag gleiten und die beiden flächigen Elemente (7) schließlich fest, aber reversibel verbinden.

Für den Fall, dass zwei flächige Elemente (7) nicht eben, sondern in einem Winkel zueinander verbunden werden sollen, werden zunächst Schraubbolzen (105) in zwei benachbarte Beschläge (1) der beiden flächigen Elemente (7) eingeschraubt und anschließend ein winkliges Verbindungselement (5) mit seiner Aussparung (501) aufgeschoben, bzw. eingeschoben.

In einer weiteren Ausführungsform kann das modulare Stellwandsystems (300) ferner ein oder mehrere Fußelemente (9) umfassen, die in das zumindest eine erste Innengewinde (101a) des Grundkörpers (101) des Beschlags (1) einschraubbar sind.

In einer anderen Ausführungsform kann das modulare Stellwandsystem (300) ferner ein oder mehrere Halterungen umfassen, die in das zumindest eine erste Innengewinde (101a) des Grundkörpers (101) des Beschlags (1) einschraubbar sind.

In einer weiteren Ausführungsform kann das modulare Stellwandsystem (300) ferner zumindest ein Eckelement (11) umfassen, das zumindest eine glatte Seitenfläche (1101) und zwei durchbrochene Seitenflächen (1103) aufweist, wobei jede durchbrochene Seitenfläche (1103) zwei Aussparungen jeweils mit einem Langloch (11031) und einer mittig angeordneten kreisförmigen Öffnung (1103c) aufweist, welche dem Langloch (1031) und der kreisförmigen Öffnung (103c) des Schließblechs (103) des Beschlags (1) entsprechen.

Die Fußelemente (9) bestehen vorzugsweise aus einem zu dem Innengewinde (101a, 101b) passenden Gewinde (901), insbesondere ein M8-Gewinde, und einer daran angebrachten Standplatte (903). Die Fußelemente (9) dienen dazu, die einzelnen flächigen Elemente (7) auf dem Untergrund abzustützen. Durch das Gewinde (901) sind die Fußelemente (9) in dem Innengewinde (101a, 101b) zudem höhenverstellbar, so dass das modulare Stellwandsystem (300) auch bei unebenen Untergründen gut ausgerichtet werden kann. Um die Fußelemente (9) arretieren zu können, ist vorzugsweise ferner eine Kontermutter (905) vorgesehen, die nach dem Ausrichten festgezogen wird. Mittels der Kontermutter (905) können auch die winkligen Verbindungselemente (5) nach ihrem Aufschieben festgezogen werden.

Die Halterungen können vorzugsweise in die in der oberen Seitenfläche (701) vorgesehenen Beschläge (1) eingeschraubt werden und beispielsweise ein Beleuchtungssystem für die flächigen Elemente (7) oder Dachelemente aufnehmen. Weitere Vorrichtungen, die an den Halterungen befestigt werden können, sind Abspannungen, Bilderrahmenschienen, Abhängungen, Konstruktionsrahmen, Kabelführungen und dergleichen.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren.

Es zeigen:
Fig. 1 eine schematische perspektivische Explosionsdarstellung eines erfindungsgemäßen Beschlags 1,
Fig. 2a - c schematische Darstellungen eines Schließblechs 103,
Fig. 3a - c schematische Darstellungen eines Grundkörpers 101,
Fig. 4 eine schematische Darstellung eines erfindungsgemäßen Beschlags 1 im Querschnitt mit eingeschraubtem Schraubbolzen 105,
Fig. 5a - d schematische Darstellungen eines Schraubbolzens 105,
Fig. 6a - e schematische Darstellungen von winkligen Verbindungselementen 5
Fig. 7a - d schematische Darstellungen eines Fußelements 9
Fig. 8 eine schematische Darstellung eines flächigen Elements 7,
Fig. 9a + b schematische Darstellungen einer Aussparung 703,
Fig. 10a + b schematische Darstellungen einer Hilfsaussparung 705 und
Fig. 11a - d schematische Darstellungen eines Eckelements 11.

In den Figuren werden gleiche Teile mit den gleichen Bezugszeichen versehen und zur besseren Übersichtlichkeit in einigen Figuren nicht alle Bezugszeichen angegeben. Die Figuren sind ferner Prinzipdarstellungen, in denen die angegebenen Maße (in Millimetern) konkrete bevorzugte Ausführungsformen darstellen, welche die Erfindung nicht einschränken.

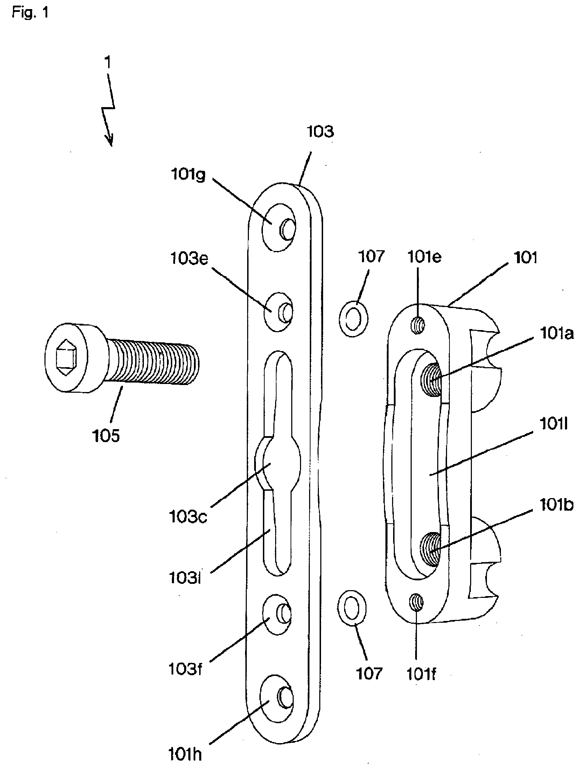

In Figur 1 ist ein erfindungsgemäßer Beschlag 1 schematisch und perspektivisch explosionsartig dargestellt, woraus die Anordnung von Grundkörper 101, Schließblech 103 und Schraubbolzen 105 deutlich wird. Die Innengewinde 101a, 101b zur Aufnahme u.a. des Schraubbolzens 105 sind vorzugsweise M8-Gewinde. Die vorzugsweise als Innengewinde ausgelegten Verbindungsaufnahmen 101e, 101f sind insbesondere M4-Gewinde.

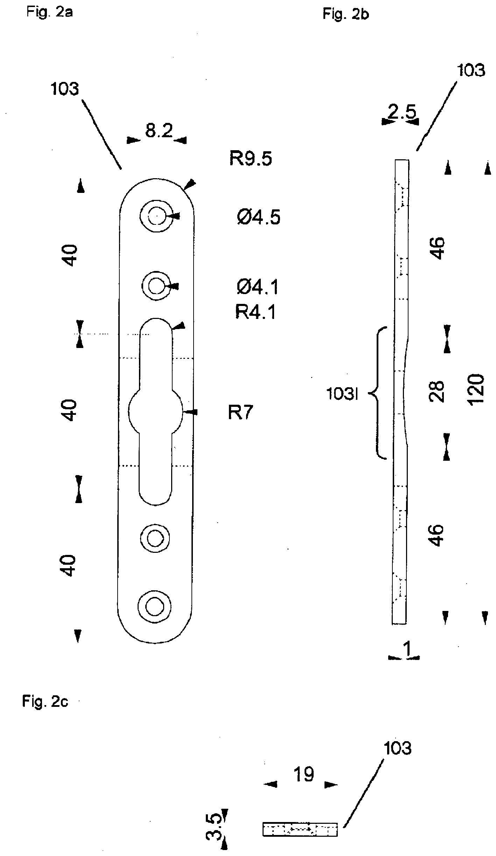

Figuren 2a bis 2c stellen ein Schließblech 103 schematisch in der Draufsicht und in Schnittansichten dar. Die gestrichelten Linien oberhalb und unterhalb der kreisförmigen Öffnung 103c grenzen den verjüngten Bereich 103j ein, in welchem das Schließblech 103 in dieser konkreten Form von 3 mm Dicke auf 2 mm Dicke verjüngt ist.

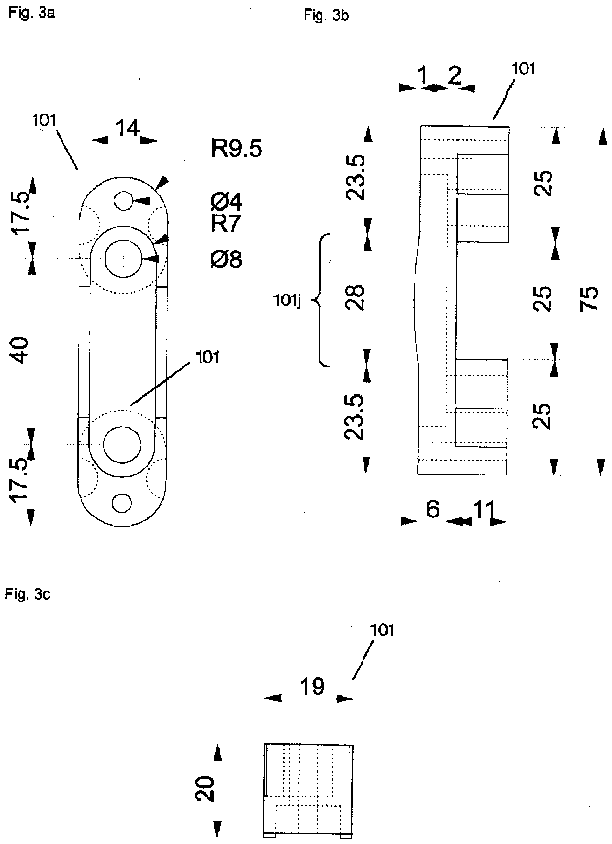

Figuren 3a bis 3c stellen einen Grundkörper 101 schematisch in der Draufsicht und in Schnittansichten dar.

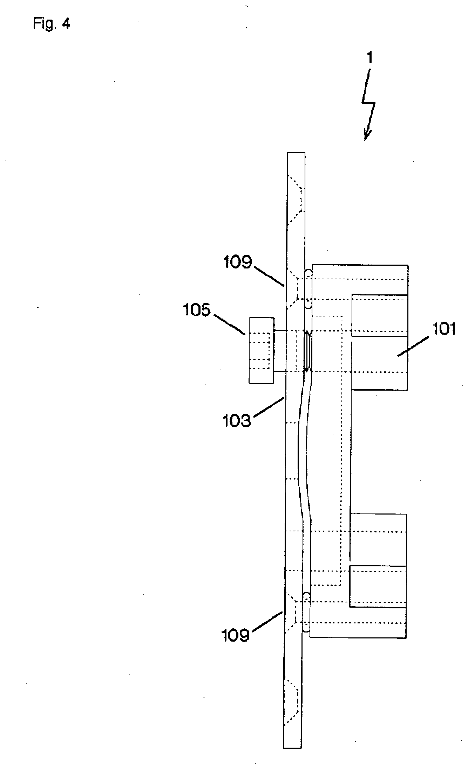

Figur 4 ist eine schematische Querschnittsansicht eines Beschlags 1 mit eingeschraubtem Schraubbolzen 105. Zwischen Grundkörper 101 und Schließblech 103 sind zwei elastische Elemente 107 vorgesehen.

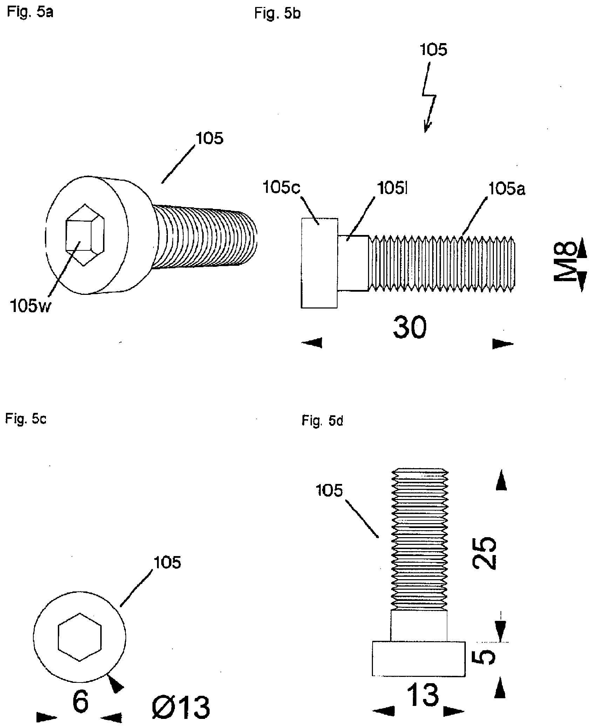

Ein Schraubbolzen 105 wird in den Figuren 5a bis 5d schematisch dargestellt.

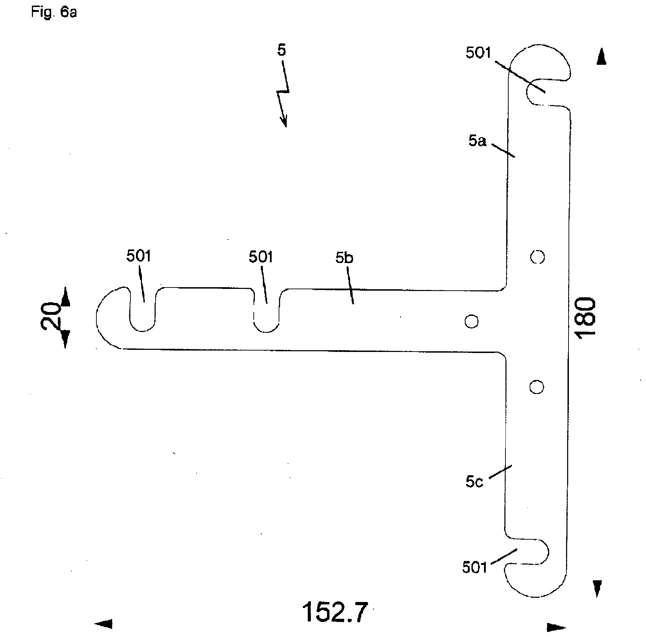

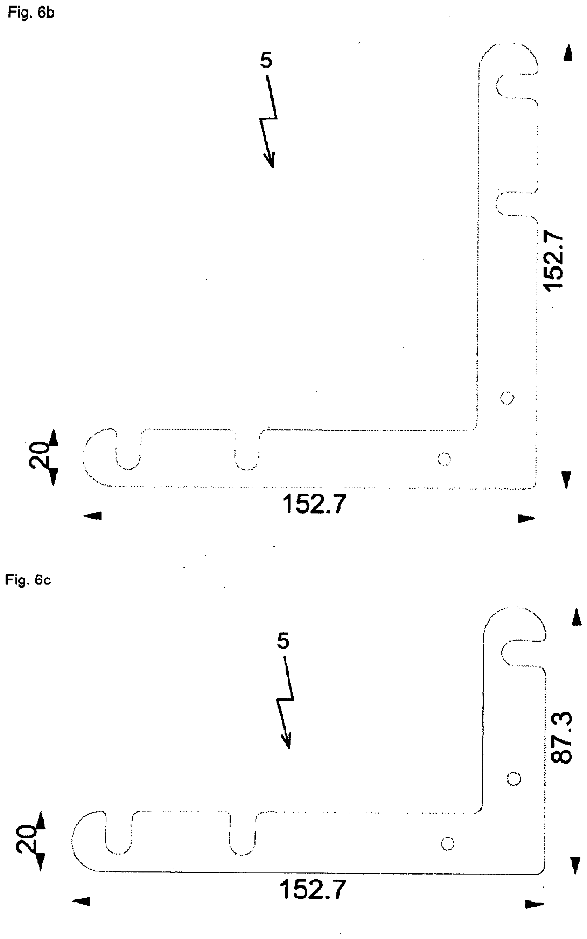

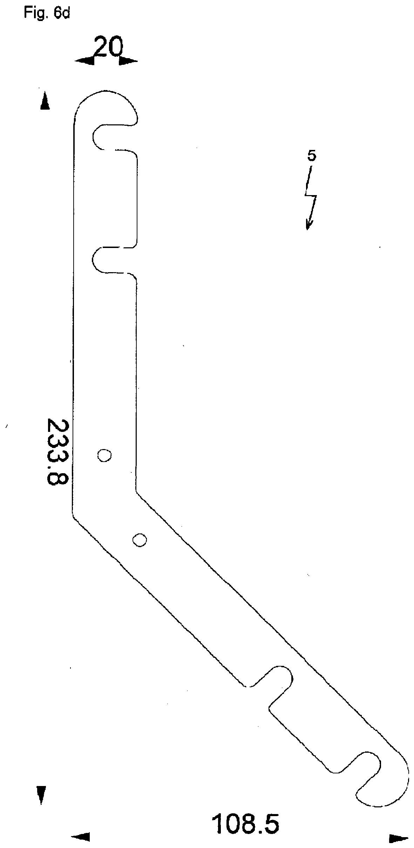

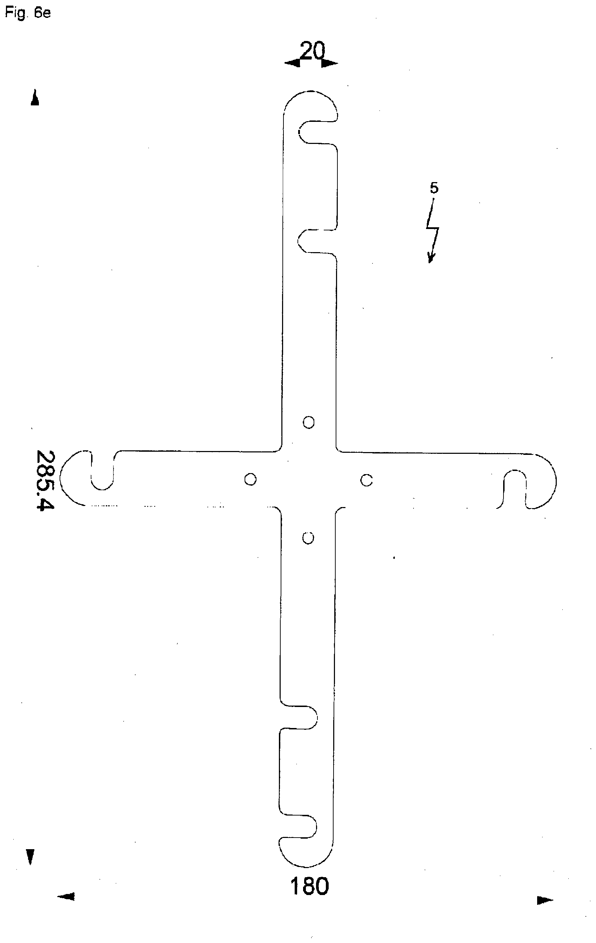

Vorstehend wurden verschiedene Ausführungsformen von winkligen Verbindungselementen 5 bereits beschrieben. Figuren 6a bis 6e stellen beispielhaft einige dieser Ausführungsformen schematisch dar.

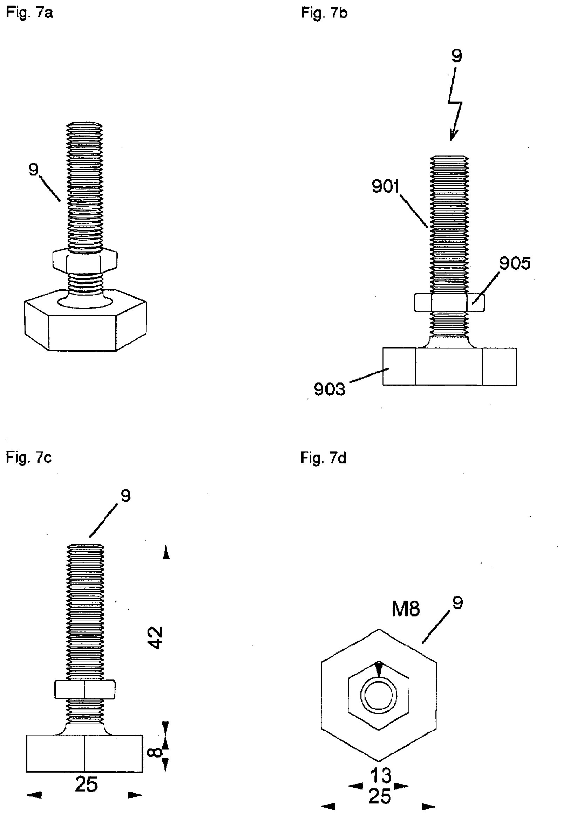

Figuren 7a bis 7d zeigen schematisch ein Fußelement 9.

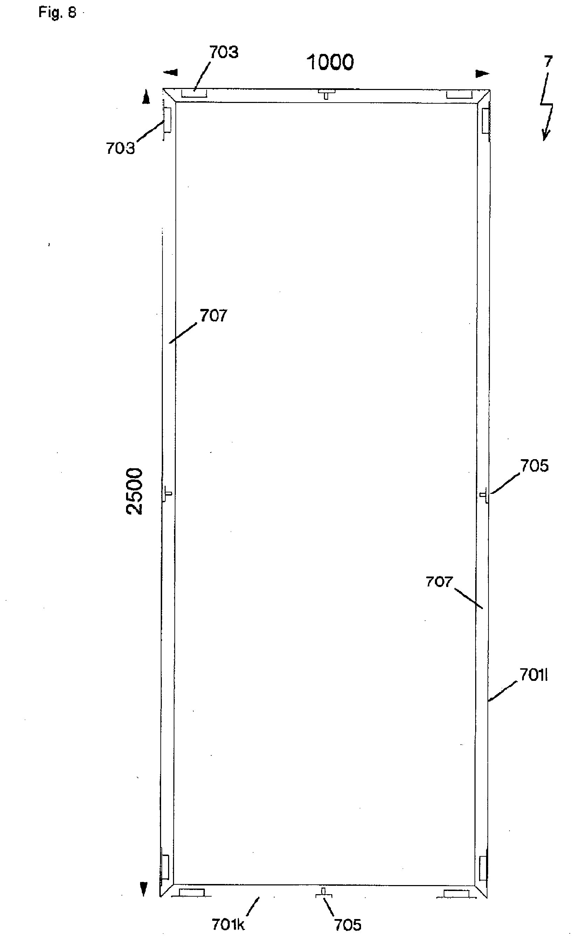

Eine spezielle Ausführungsform des flächigen Elements 7 wird in Figur 8 in einer Draufsicht schematisch dargestellt. In dieser Ausführungsform sind Hilfsaussparungen 705 mittig in allen Seitenflächen 701k, 701l vorgesehen.

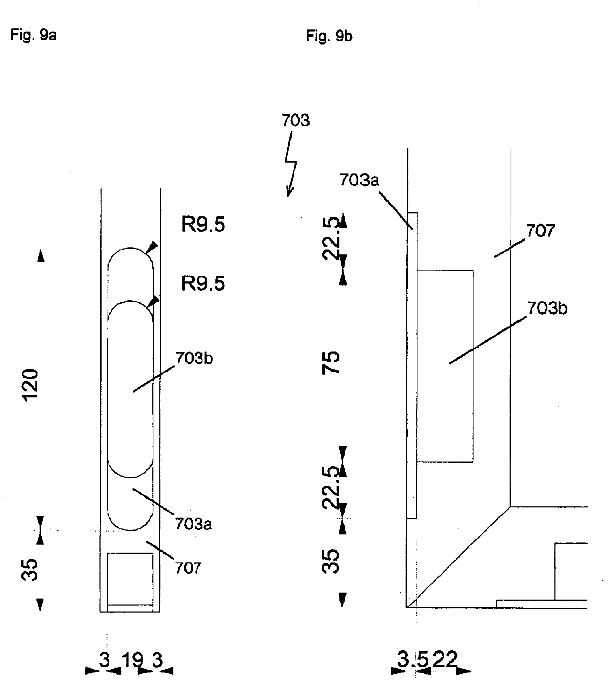

In den Figuren 8 und 9 werden Ausführungsformen der Aussparung 703 und der Hilfsaussparung 705 schematisch in der Draufsicht und in Schnittansichten dargestellt.

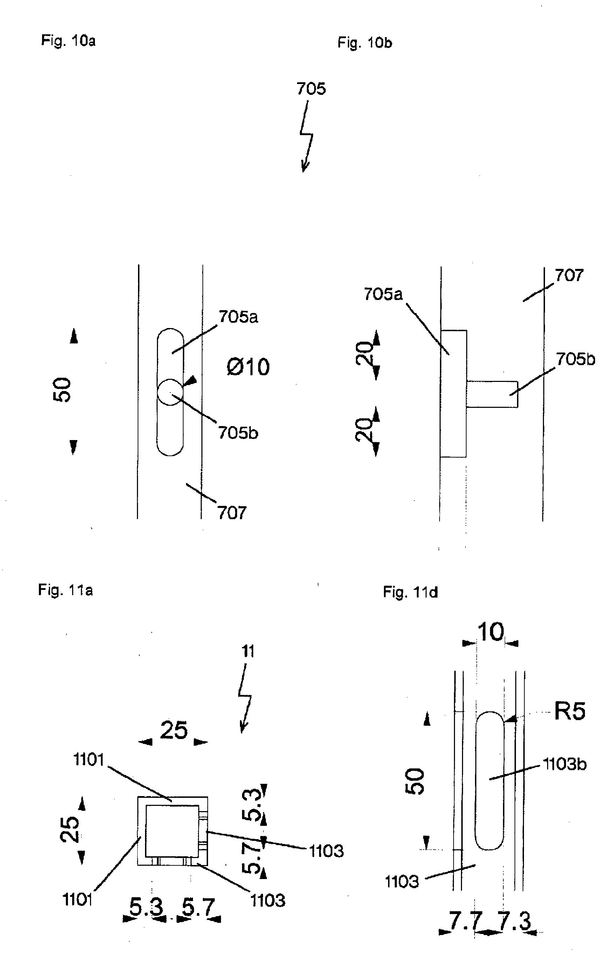

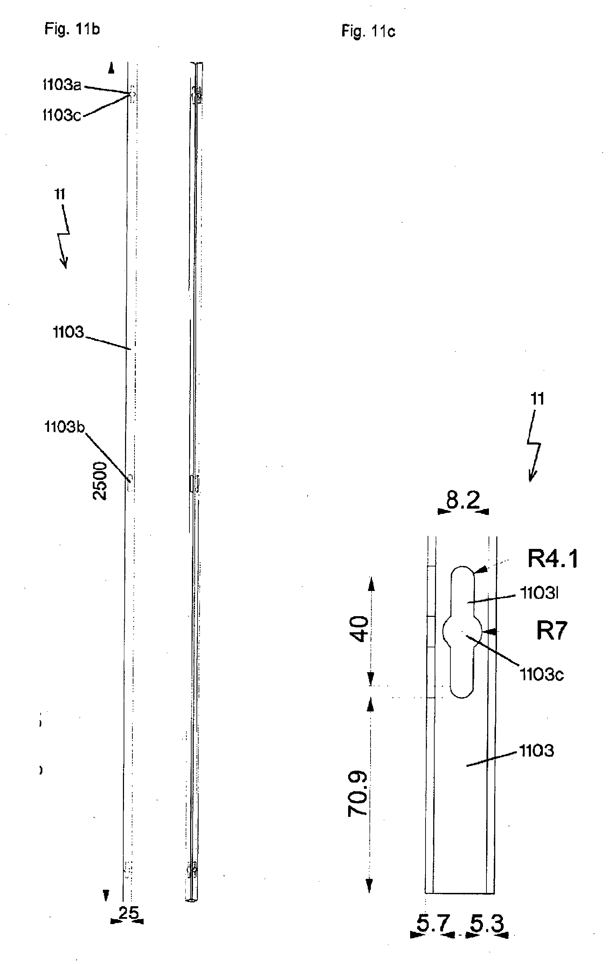

Figuren 11a bis 11d zeigen ein Eckelement 11 nach einer Ausführungsform, wobei Figur 11a eine Querschnittsansicht von oben ist und Figur 11b eine Seitenansicht und eine Perspektive zeigt. Figur 11c stellen eine Aussparung mit

Langloch 11031 und kreisförmiger Öffnung 1103c dar, welche dem Langloch 103l und der kreisförmigen Öffnung 103c entsprechen. Figur 11d zeigt schematisch eine Hilfsaussparung 1103b.

### Bezugszeichenliste

- 1: Beschlag
- 3: Hilfsbolzen
- 5: winkliges Verbindungselement
- 5a: Schenkel des winkligen Verbindungselements 5
- 5b: Schenkel des winkligen Verbindungselements 5
- 5c,: Schenkel des winkligen Verbindungselements 5
- 5d: Schenkel des winkligen Verbindungselements 5
- 7: flächiges Element
- 9: Fußelement
- 11: Eckelement
- 100: Beschlagsystem
- 101: Grundkörper
- 101a: erstes Innengewinde
- 101b: zweites Innengewinde
- 101e: erste Verbindungsaufnahme
- 101f: zweite Verbindungsaufnahme
- 101l: langlochförmige Vertiefung
- 103: Schließblech
- 103c: kreisförmige Öffnung
- 103e: erste Verbindungsdurchführung
- 103f: zweite Verbindungsdurchführung
- 103g: erstes Verbindungsloch
- 103h: zweites Verbindungslochs
- 103j: verjüngter Bereich
- 103l: Langloch
- 105: Schraubbolzen
- 105a: Außengewinde
- 105c: Kopf
- 105l: glatter Bereich
- 105w: Werkzeugaufnahme
- 107: elastisches Element
- 109: Verbindungsmittel
- 300: modulares Stellwandsystem
- 501: Aussparung
- 701: Seitenfläche
- 701k: kürzere Seitenfläche
- 701l: längere Seitenfläche
- 703: Aussparungen
- 705: Hilfsaussparung
- 705b: Hilfssackloch
- 901: Gewinde
- 903: Standplatte
- 905: Kontermutter
- 1101: glatte Seitenfläche
- 1103: durchbrochene Seitenfläche
- 1103c: kreisförmige Öffnung
- 1103l: Langloch

## Patentansprüche

1. Beschlag (1) zum reversiblen Verbinden von flächigen Elementen (7), umfassend
- einen Grundkörper (101), der eine langlochförmige Vertiefung (101l), zumindest ein erstes Innengewinde (101a) und zumindest eine erste Verbindungsaufnahme (101e) aufweist,
- ein Schließblech (103), das ein Langloch (103l) mit einer mittig angeordneten kreisförmigen Öffnung (103c) und zumindest eine erste Verbindungsdurchführung (103e) aufweist,
wobei der Grundkörper (101) und das Schließblech (103) durch zumindest ein Verbindungsmittel (109) lösbar miteinander verbunden sind, und
- einen Schraubbolzen (105), der an seinem ersten Ende ein zu dem ersten Innengewinde (101a) des Grundkörpers (101) passendes Außengewinde (105a) und an seinem zweiten Ende einen Kopf (105c) aufweist, dessen Durchmesser kleiner als der Durchmesser der kreisförmigen Öffnung (103c) des Schließblechs (103) und größer als die Breite des Langlochs (103l) in dem Schließblech (103) ist.

2. Beschlag (1) nach Anspruch 1, wobei das Schließblech (103) zu der kreisförmigen Öffnung (103c) hin einen verjüngten Bereich (103j) aufweist.

3. Beschlag (1) nach Anspruch 1 oder 2, wobei zwischen dem Grundkörper (101) und dem Schließblech (103) zumindest ein elastisches Element (107) angeordnet ist.

4. Beschlagsystem (100) zum reversiblen Verbinden von flächigen Elementen (7), umfassend
- zumindest zwei Beschläge (1) nach einem der Ansprüche 1 bis 3 zum reversiblen Verbinden von flächigen Elementen (7), wobei der Schraubbolzen (105) in einen der zumindest zwei Beschläge (1) eingeschraubt ist.

5. Beschlagsystem (100) nach Anspruch 4, ferner umfassend zumindest einen Hilfsbolzen (3), der dazu ausgelegt ist, in ein Hilfssackloch (705b) einer Hilfsaussparung (705) aufgenommen zu werden, wobei der Durchmesser des Hilfsbolzens (3) dem Durchmesser des Hilfssacklochs (705b) entspricht.

6. Beschlagsystem (100) nach Anspruch 4 oder 5, ferner umfassend zumindest ein winkliges Verbindungselement (5), das zweischenklig oder dreischenklig oder vierschenklig ausgestaltet ist, wobei in jedem Schenkel (5a, 5b, 5c, 5d) zumindest eine Aussparung (501) vorgesehen ist, deren Durchmesser größer als der Durchmesser des Schraubbolzens (105) und kleiner als der Kopf (105c) des Schraubbolzens (105) ist.

7. Modulares Stellwandsystem (300), umfassend
- zumindest zwei flächige Elemente (7) und
- zumindest zwei Beschlagsysteme (100) nach einem der Ansprüche 4 bis 6, wobei die zumindest zwei flächigen Elemente (7) zumindest in ihren zueinander gewandten Seitenflächen (701) jeweils Aussparungen (703) zur Aufnahme der Beschlagsysteme (100) aufweisen, wobei in jede Aussparung (703) ein Beschlag (1) eines Beschlagsystems (100) eingebracht ist, so dass die zumindest zwei flächigen Elemente (7) mittels der zumindest zwei Beschlagsysteme (100) untereinander reversibel verbindbar sind.

8. Modulares Stellwandsystem (300) nach Anspruch 7, wobei die flächigen Elemente (7) rechteckig ausgebildet sind und
- in ihren kürzeren Seitenflächen (701k) jeweils zwei Aussparungen (703) zur Aufnahme der Beschlagsysteme (100) aufweisen und
- in ihren längeren Seitenflächen (701l) jeweils zwei Aussparungen (703) zur Aufnahme der Beschlagsysteme (100) aufweisen und
- in ihren längeren Seitenflächen (701l) mittig jeweils eine Hilfsaussparung (705) zur Aufnahme des Hilfsbolzens (3) aufweisen.

9. Modulares Stellwandsystem (300) nach Anspruch 7 oder 8, ferner umfassend ein oder mehrere Fußelemente (9), die in das zumindest eine erste Innengewinde (101a) des Grundkörpers (101) des Beschlags (1) einschraubbar sind.

10. Modulares Stellwandsystem (300) nach einem der Ansprüche 7 bis 9, ferner umfassend ein oder mehrere Halterungen, die in das zumindest eine erste Innengewinde (101a) des Grundkörpers (101) des Beschlags (1) einschraubbar sind.

11. Modulares Stellwandsystem (300) nach einem der Ansprüche 7 bis 10, ferner umfassend zumindest ein Eckelement (11), das zumindest eine glatte Seitenfläche (1101) und zwei durchbrochene Seitenflächen (1103) aufweist, wobei jede durchbrochene Seitenfläche (1103) zwei Aussparungen jeweils mit einem Langloch (1103l) und einer mittig angeordneten kreisförmigen Öffnung (1103c) aufweist, welche dem Langloch (103l) und der kreisförmigen Öffnung (103c) des Schließblechs (103) des Beschlags (1) entsprechen.

12. Verwendung des Beschlagsystems (100) nach einem der Ansprüche 4 bis 6 zum reversiblen Verbinden von Elementen im Rahmenbau, Bodenplatten, Deckenplatten, Akustikpaneele oder festen Wänden für Notunterkünfte.

13. Verwendung des modularen Stellwandsystems (300) nach einem der Ansprüche 7 bis 11 für Messen und Ausstellungen, bei denen leichtere Ausführungen des modularen Stellwandsystems (300) verwendet werden.

14. Verwendung des modularen Stellwandsystems (300) nach einem der Ansprüche 7 bis 11 zur Unterteilung von Notunterkünften mit einer stabileren Version des modularen Stellwandsystems (300).

15. Verwendung des modularen Stellwandsystems (300) nach einem der Ansprüche 7 bis 11 für den Ladenbau, den Innenausbau oder die variable Gliederung in Großraumbüros.

## Claims

1. Fitting (1) for reversibly connecting flat components (7), comprising
- a basic body (101) which has a slot-shaped depression (101l), at least one first internal thread (101a) and at least one first connecting receptacle (101e),
- a locking plate (103) which has a slot (103l) with a centrally arranged circular opening (103c) and at least one first connecting leadthrough (103e),
wherein the basic body (101) and the locking plate (103) are releasably connected to each other by at least one connecting means (109), and
- a screw bolt (105) which, at its first end, has an external thread (105a) matching the first internal thread (101a) of the basic body (101) and, at its second end, has a head (105c), the diameter of which is smaller than the diameter of the circular opening (103c) of the locking plate (103) and greater than the width of the slot (103l) in the locking plate (103).

2. Fitting (1) according to Claim 1, wherein the locking plate (103) has a tapered region (103j) towards the circular opening (103c).

3. Fitting (1) according to Claim 1 or 2, wherein at least one elastic element (107) is arranged between the basic body (101) and the locking plate (103).

4. Fitting system (100) for reversibly connecting flat elements (7), comprising
- at least two fittings (1) according to one of Claims 1 to 3 for reversibly connecting flat elements (7),
wherein the screw bolt (105) is screwed into one of the at least two fittings (1).

5. Fitting system (100) according to Claim 4, furthermore comprising at least one auxiliary bolt (3) which is configured to be received in an auxiliary blind hole (705b) of an auxiliary recess (705), wherein the diameter of the auxiliary bolt (3) corresponds to the diameter of the auxiliary blind hole (705b).

6. Fitting system (100) according to Claim 4 or 5, furthermore comprising at least one angled connecting element (5) which is configured with two limbs or three limbs or four limbs, wherein each limb (5a, 5b, 5c, 5d) is provided with at least one recess (501), the diameter of which is greater than the diameter of the screw bolt (105) and smaller than the head (105c) of the screw bolt (105).

7. Modular positioning wall system (300), comprising
- at least two flat elements (7) and
- at least two fitting systems (100) according to one of Claims 4 to 6,
wherein the at least two flat elements (7) in each case have recesses (703), at least in their mutually facing side surfaces (701), for receiving the fitting systems (100), wherein a fitting (1) of a fitting system (100) is introduced into each recess (703), and therefore the at least two flat elements (7) are reversibly connectable to one another by means of the at least two fitting systems (100).

8. Modular positioning wall system (300) according to Claim 7, wherein the flat elements (7) are of rectangular design and
- each have two recesses (703) in their shorter side surfaces (701k) for receiving the fitting system (100), and
- each have two recesses (703) in their longer side surfaces (701l) for receiving the fitting system (100), and
- each have an auxiliary recess (705) centrally in their longer side surfaces (701l) for receiving the auxiliary bolt (3).

9. Modular positioning wall system (300) according to Claim 7 or 8, furthermore comprising one or more foot elements (9) which are screwable into the at least one first internal thread (101a) of the basic body (101) of the fitting (1).

10. Modular positioning wall system (300) according to one of Claims 7 to 9, furthermore comprising one or more holders which are screwable into the at least one first internal thread (101a) of the basic body (101) of the fitting (1).

11. Modular positioning wall system (300) according to one of Claims 7 to 10, furthermore comprising at least one corner element (11) which has at least one smooth side surface (110l) and two pierced side surfaces (1103), wherein each pierced side surface (1103) has two recesses in each case with a slot (1103l) and a centrally arranged circular opening (1103c), which slot and opening correspond to the slot (103l) and the circular opening (103c) of the locking plate (103) of the fitting (1).

12. Use of the fitting system (100) according to one of Claims 4 to 6 for reversibly connecting elements in a frame construction, floor plates, ceiling plates, acoustic panels or fixed walls for emergency shelters.

13. Use of the modular positioning wall system (300) according to one of Claims 7 to 11 for fairs and exhibitions, in which lighter embodiments of the modular positioning wall system (300) are used.

14. Use of the modular positioning wall system (300) according to one of Claims 7 to 11 for subdividing emergency shelters with a more stable version of the modular positioning wall system (300).

15. Use of the modular positioning wall system (300) according to one of Claims 7 to 11 for shop fitting, interior design or the variable division in large-capacity offices.

## Revendications

1. Ferrure (1) pour le raccordement réversible d'éléments plats (7), comprenant :
- un corps de base (101) qui présente un renfoncement en forme de trou oblong (101l), au moins un premier filetage intérieur (101a) et au moins un premier logement de raccordement (101e),
- une gâche (103), qui présente un trou oblong (103l) avec une ouverture circulaire (103c) disposée centralement et au moins un premier passage de raccordement (103e),
le corps de base (101) et la gâche (103) étant raccordés l'un à l'autre de manière détachable par le biais d'au moins un moyen de raccordement (109), et
- un boulon fileté (105) qui présente, au niveau de sa première extrémité, un filetage extérieur (105a) adapté au premier filetage intérieur (101a) du corps de base (101) et, au niveau de sa deuxième extrémité, une tête (105c) dont le diamètre est inférieur au diamètre de l'ouverture circulaire (103c) de la gâche (103) et supérieur à la largeur du trou oblong (103l) dans la gâche (103).

2. Ferrure (1) selon la revendication 1, dans laquelle la gâche (103) présente une région rétrécie (103j) vers l'ouverture circulaire (103c).

3. Ferrure (1) selon la revendication 1 ou 2, dans laquelle au moins un élément élastique (107) est disposé entre le corps de base (101) et la gâche (103).

4. Système de ferrure (100) pour le raccordement réversible d'éléments plats (7), comprenant
- au moins deux ferrures (1) selon l'une quelconque des revendications 1 à 3 pour le raccordement réversible d'éléments plats (7),
le boulon fileté (105) étant vissé dans l'une des au moins deux ferrures (1).

5. Système de ferrure (100) selon la revendication 4, comprenant en outre au moins un boulon auxiliaire (3) qui est conçu pour être reçu dans un trou borgne auxiliaire (705b) d'un évidement auxiliaire (705), le diamètre du boulon auxiliaire (3) correspondant au diamètre du trou borgne auxiliaire (705b).

6. Système de ferrure (100) selon la revendication 4 ou 5, comprenant en outre au moins un élément de raccordement coudé (5) qui est configuré avec deux, trois ou quatre branches, au moins un évidement (501) dont le diamètre est supérieur au diamètre du boulon fileté (105) et inférieur à la tête (105c) du boulon fileté (105) étant prévu dans chaque branche (5a, 5b, 5c, 5d).

7. Système de paroi mobile modulaire (300), comprenant
- au moins deux éléments plats (7) et
- au moins deux systèmes de ferrure (100) selon l'une quelconque des revendications 4 à 6, les au moins deux éléments plats (7) présentant au moins, dans leurs faces latérales tournées l'une vers l'autre (701), des évidements respectifs (703) pour recevoir les systèmes de ferrure (100), une ferrure (1) d'un système de ferrure (100) étant introduite dans chaque évidement (703) de telle sorte que les au moins deux éléments plats (7) puissent être raccordés de manière réversible les uns aux autres au moyen des au moins deux systèmes de ferrure (100).

8. Système de paroi mobile modulaire (300) selon la revendication 7, dans lequel les éléments plats (7) sont réalisés sous forme rectangulaire et présentent
- dans leurs faces latérales plus courtes (701k), à chaque fois deux évidements (703) pour recevoir les systèmes de ferrure (100) et
- dans leurs faces latérales plus longues (701l), à chaque fois deux évidements (703) pour recevoir les systèmes de ferrure (100) et
- dans leurs faces latérales plus longues (701l), centralement à chaque fois un évidement auxiliaire (705) pour recevoir le boulon auxiliaire (3).

9. Système de paroi mobile modulaire (300) selon la revendication 7 ou 8, comprenant en outre un ou plusieurs éléments de pied (9) qui peuvent être vissés dans l'au moins un premier filetage intérieur (101a) du corps de base (101) de la ferrure (1).

10. Système de paroi mobile modulaire (300) selon l'une quelconque des revendications 7 à 9, comprenant en outre une ou plusieurs fixations qui peuvent être vissées dans l'au moins un premier filetage intérieur (101a) du corps de base (101) de la ferrure (1).

11. Système de paroi mobile modulaire (300) selon l'une quelconque des revendications 7 à 10, comprenant en outre au moins un élément de coin (11) qui présente au moins une face latérale lisse (1101) et deux faces latérales interrompues (1103), chaque face latérale interrompue (1103) présentant deux évidements à chaque fois avec un trou oblong (1103l) et une ouverture circulaire disposée centralement (1103c), qui correspondent au trou oblong (103l) et à l'ouverture circulaire (103c) de la gâche (103) de la ferrure (1).

12. Utilisation du système de ferrure (100) selon l'une quelconque des revendications 4 à 6, pour le raccordement réversible d'éléments dans la construction de cadre, pour des plaques de sol, des plaques de plafond, des panneaux acoustiques ou des parois rigides pour des abris provisoires.

13. Utilisation du système de paroi mobile modulaire (300) selon l'une quelconque des revendications 7 à 11 pour des foires et des expositions, dans lesquelles des réalisations plus légères du système de paroi mobile modulaire (300) sont utilisées.

14. Utilisation du système de paroi mobile modulaire (300) selon l'une quelconque des revendications 7 à 11 pour cloisonner des abris provisoires avec une version plus stable du système de paroi mobile modulaire (300).

15. Utilisation du système de paroi mobile modulaire (300) selon l'une quelconque des revendications 7 à 11 pour la construction de magasins, l'aménagement intérieur ou le cloisonnement variable dans des bureaux paysagers.
